# EUROPEAN PATENT SPECIFICATION

(11) **EP 4 343 940 B1**
(45) Date of publication and mention of the grant of the patent: **14.01.2026**
(21) Application number: 22928893.1
(22) Date of filing: 22.11.2022
(51) Int. Cl.: H01M 50/244, H01M 10/04, H01M 50/202, H01M 50/204, H01M 50/317, H01M 50/383, H01M 50/358

(54) **BATTERY TEST DEVICE**
BATTERIETESTVORRICHTUNG
DISPOSITIF DE TEST DE BATTERIE

(30) Priority: 28.02.2022 JP 2022029217
(43) Date of publication of application: 27.03.2024
(73) Proprietor: Toyo System Co., Ltd., Iwaki-shi, Fukushima 972-8316 (JP)
(72) Inventor: OMORI Jun, Iwaki-shi, Fukushima 972-8316 (JP); YAMANOBE Kenji, Iwaki-shi, Fukushima 972-8316 (JP); SHOJI Hideki, Iwaki-shi, Fukushima 972-8316 (JP)
(74) Representative: Schön, Christoph
(86) International application number: PCT/JP2022/043241
(87) International publication number: WO 2023/162376

(56) References cited:
- EP-A1- 2 757 612
- EP-B1- 3 686 594
- CN-A- 112 787 012
- JP-A- 2012 226 915
- JP-A- 2013 164 297
- JP-A- 2014 165 068
- JP-A- 2018 063 765
- JP-A- H08 190 938
- JP-B2- 6 332 938
- US-A1- 2016 104 923
- US-A1- 2020 350 638
- US-A1- 2021 077 842

## Description

### Technical Field

The present invention relates to a battery test apparatus which performs a charge/discharge test of a secondary battery.

### Background Art

There has heretofore been known a test apparatus which is configured so that mounting parts of a plurality of secondary batteries for test can be put in and taken out of a thermostatic oven to thereby test the secondary batteries. The secondary batteries are subjected to a charge/discharge test at a predetermined environmental temperature (for example, Patent Literature 1).

As a result of the charge/discharge test, some secondary batteries ignite. Although Patent Literature 1 does not refer to what to do in the case of ignition, for example, there were a method of detecting generated smoke and supplying water to the inside of a battery holder to extinguish the ignited secondary battery, etc.
US 2020/350638 A1 discloses a gas analysis apparatus for a secondary battery comprising a chamber comprising the secondary battery mounted therein, an induction medium supply module configured to generate a flow of an induction medium into the chamber and an analysis module configured to analyze the gas introduced into the analysis module by the flow of the induction medium, wherein said chamber further comprises an inlet in fluid communication with the induction medium supply module, an outlet in fluid communication with the analysis module and a safety valve configured to release flame, dust and gas generated in the secondary battery during explosion or ignition of said secondary battery to an outside of the device.
EP 3 686 594 B1 discloses a chamber and a system for real-time analysis of gas generated inside a secondary battery, said chamber comprising a first housing, a second housing which is thermally conductive and surrounding the first housing, an inlet for connecting a pump module for generating a flow of an induction medium into the chamber, and an outlet for connecting an analysis module for analyzing the generated gas in the secondary battery by the flow of the induction medium, a temperature sensor for detecting temperature of the secondary battery or temperature inside the chamber, and a heating member for heating the secondary battery, wherein the heating member is inserted in the second housing, and wherein the first housing is insulative and a secondary battery is mounted in an inner space surrounded by the first housing.
EP 2 757 612 A1 discloses a battery case for mounting under a floor of a vehicle comprising a case body containing a battery module and a cover for closing over an opening of the case body, wherein a reinforcement member for reinforcing the case body is attached to an outer surface of the case body, the case body is provided with a gas circulation hole for letting a gas flow from within the case body into the reinforcement member, and the reinforcement member is provided with a gas exhaust port for letting out the gas having flown into the reinforcement member.
CN 112 787 012 A discloses a battery rack for battery maintenance and safety protection comprising an injection stand column and a discharge stand column, wherein the injection stand column comprises a hollow injection stand column body and a plurality of first branch pipes, said first branch pipes being connected to a first injection and discharge port of a battery, and wherein the discharge stand column comprises a hollow discharge stand column body and a plurality of second branch pipes, said second branch pipes being connected to a second injection and discharge port of the batter, and a plurality of shelves which can be mounted on the stand columns.

### Citation List

### Patent Literature

Patent Literature 1: Japanese Patent No. 5738660

### Summary of Invention

### Technical Problem

However, in the thermostatic oven, a plurality of battery holders are arranged with almost no space between them. Therefore, upon extinguishing with water, the water enters the adjacent battery holders, which may affect the charge/discharge test of the nonignited secondary battery.

The present invention has been made in view of such circumstances. It is an object of the present invention to provide a battery test apparatus capable of performing a charge/discharge test of a secondary battery without using water.

### Solution to Problem

In order to achieve the above object, the present invention provides a battery test apparatus which performs a charge/discharge test of each of secondary batteries as defined in appended claim 1 or in appended claim 2.

When testing the secondary batteries by using the battery test apparatus of the present invention, some secondary batteries may catch fire. The battery holder for the secondary battery is constituted of the fireproof and pressure resistant container and hermetically holds the secondary battery. Therefore, it is possible to basically confine the gas (exhaust gas) generated by the ignition and prevent the gas from leaking to the outside.

Further, the battery holder has the exhaust port connected to the passage which discharges the gas generated by the ignition. Therefore, the gas can be guided to the outside of the thermostatic oven through the passage and released in pressure. Thus, even if the ignition of the secondary battery occurs, the battery test apparatus of the present invention can treat it without using water.

### Brief Description of Drawings

FIG. 1 is an overall view of a battery test apparatus according to a first embodiment of the present invention.
FIG. 2 is a side view of the battery test apparatus according to the first embodiment.
FIG. 3 is a perspective view of a battery holder according to the first embodiment.
FIG. 4 is a view of the battery holder according to the first embodiment when viewed from above (without an upper cover).
FIG. 5 is an overall view of a battery test apparatus according to a second embodiment of the present invention.
FIG. 6 is a view of a battery holder according to the second embodiment when viewed from above (without an upper cover).

### Description of Embodiments

### [First Embodiment]

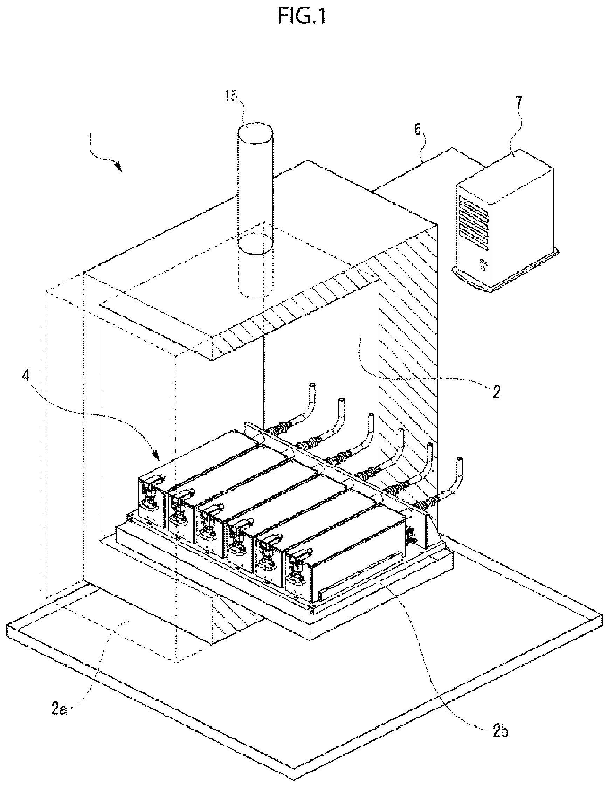

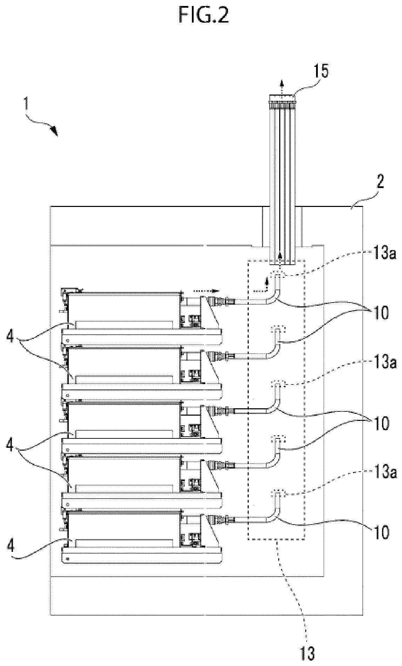

First, a battery test apparatus 1 according to the first embodiment of the present invention as defined in appended claim 1 will be described with reference to FIGS. 1 and 2.

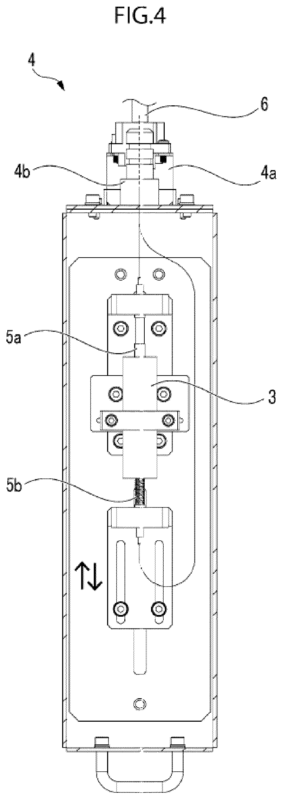

FIG. 1 is an overall perspective view of the battery test apparatus 1. For the sake of explanation, the inside of a thermostatic oven 2 is set to be made visible. The battery test apparatus 1 is an apparatus which evaluates secondary batteries by charging and discharging the secondary batteries. The battery test apparatus 1 includes the thermostatic oven 2 which keeps its internal temperature constant, a plurality of battery holders 4 which are accommodated in the thermostatic oven 2 and detachably hold the secondary batteries 3, and a charge and discharge test device 7 capable of charging and discharging the secondary battery 3 (refer to FIG. 4) via a contact probe 5 and a cable 6.

The thermostatic oven 2 is an apparatus controlled to keep the internal temperature constant by circulating temperature-controlled air and has a structure capable of preventing the influence of temperature changes from the surrounding environment.

A slide rail 2b which guides the slide of the battery holders 4 is provided in the thermostatic oven 2. Further, a one-sided open/close door 2a is provided in front of the thermostatic oven 2. The battery holder 4 can be freely drawn from the front of the thermostatic oven 2 along the slide rail 2b by opening the open/close door 2a of the thermostatic oven 2.

The battery holders 4 are accommodated in parallel in the thermostatic oven 2. Although the battery holders 4 of the lowermost stage are shown in FIG. 1 for the sake of description, a total of five stages of six battery holders 4 are actually placed per stage as shown in FIG. 2. The placement of the battery holders 4 can be changed as appropriate.

In the thermostatic oven 2, each of the battery holders 4 is connected to the charge and discharge test device 7. The charge and discharge test device 7 is capable of performing a charge/discharge test on the secondary battery 3 in the battery holder 4.

The battery holder 4 in the first embodiment is a rectangular parallelepiped holder (single channel type) capable of holding one secondary battery 3 detachably and hermetically. This battery holder 4 serves as a fireproof and pressure resistant container which can withstand even if the secondary battery 3 ignites due to the charge/discharge test.

When some secondary batteries 3 ignite due to the charge/discharge test, as shown in FIG. 2, exhaust gas is discharged from an exhaust pipe 15 protruded above the thermostatic oven 2 to the outside of the thermostatic oven 2 via a flexible hose 10 from an exhaust port of the battery holder 4. A configuration may be taken in which the exhaust gas is guided to the exhaust pipe 15 via a common passage 13 ("first common passage" in the present invention) from the flexible hose 10 of the battery holder 4. Incidentally, the flow of the exhaust gas is as indicated by dotted arrows.

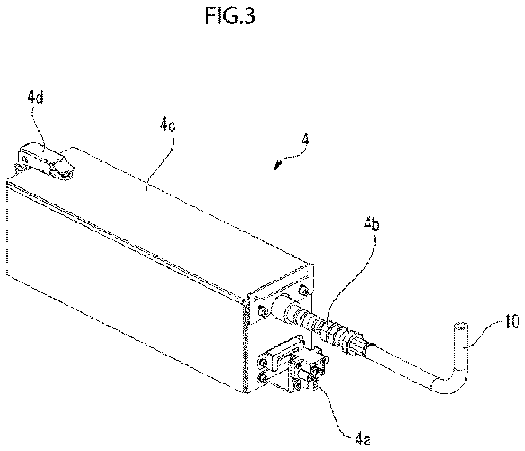

The details of the battery holder 4 will next be described with reference to FIGS. 3 and 4.

First, FIG. 3 is a perspective view of the hermetically sealed battery holder 4. A connector 4a and an exhaust port 4b are provided on one side surface (right side in the figure) of the battery holder 4. The connector 4a is a connector which connects the battery holder 4 and a cable 6 extending from the charge and discharge test device 7.

Further, the exhaust port 4b is an opening for discharging gas in the battery holder 4 to its outside. The exhaust port 4b is configured to be connectable to the flexible hose 10 ("passage" in the present invention) which guides the gas to the outside of the thermostatic oven 2.

An upper surface side of the battery holder 4 is an upper cover 4c which opens and closes when the secondary battery 3 is put in and taken out. The upper cover 4c is fixed on the other side surface (the side opposite to the connector 4a) of the battery holder 4 by a lock mechanism 4d.

Next, FIG. 4 shows the manner when the upper cover 4c of the battery holder 4 is removed. In the battery holder 4, the secondary battery 3 (cylindrical type) can be set approximately in the center thereof. Both a positive electrode contact probe pin 5a and a negative electrode contact probe pin 5b are connected to the cable 6 of the charge and discharge test device 7.

The contact probe pin 5a is made to contact with the secondary battery 3 on the upper side of the secondary battery 3 in the figure. Further, the contact probe pin 5b is configured to be movable in a vertical direction and is made to contact with the secondary battery 3 from the side below in the figure. Consequently, the secondary battery 3 can be tested by the charge and discharge test device 7. Since the battery holders 4 are held in parallel in the thermostatic oven 2 as illustrated in FIGS. 1 and 2, the battery test apparatus 1 can test the plurality of secondary batteries 3 simultaneously.

When testing the secondary batteries 3, some secondary batteries 3 catch fire. However, the battery holder 4 is constituted of the fireproof and pressure resistant container and hermetically holds the secondary batteries 3. Therefore, it is possible to basically confine gas (exhaust gas) generated by the ignition within the battery holder 4 and prevent the gas from leaking to the outside.

The exhaust gas generated by the ignition is discharged through the flexible hose 10 from the exhaust port 4b. The exhaust gas flows from the flexible hose 10 to the exhaust pipe 15 (refer to FIG. 2) and can be led to the outside of the thermostatic oven 2 and released in pressure. Thus, even if the ignition of the secondary battery 3 occurs, the battery holder 4 of the present embodiment can treat it without using water, and prevents the exhaust gas from leaking out within the thermostatic oven 2. Further, when there is a secondary battery 3 that catches fire, its battery holder 4 does not affect the adjacent battery holder 4.

Each battery holder 4 is inserted into the common passage 13 (refer to FIG. 2) and a check valve 13a ("first check valve" in the present invention) is provided in the common passage 13. The check valve 13a is structured to be opened by wind pressure of the exhaust gas in the battery holder 4. The check valve 13a allows exhaust to the common passage 13, but prevents inflow from the common passage 13 to the battery holder 4. Therefore, it is possible to prevent the exhaust gas flowing through the common passage 13 from flowing back into each battery holder 4.

The battery holder 4 may be configured to be able to test a secondary battery other than a cylindrical type. For example, in the case of secondary batteries of laminate cell specifications, each secondary battery can be tested by clamping each electrode with a current contact clip and a voltage contact clip. It is also possible to test secondary batteries of square cell specifications by a similar method.

### [Second Embodiment]

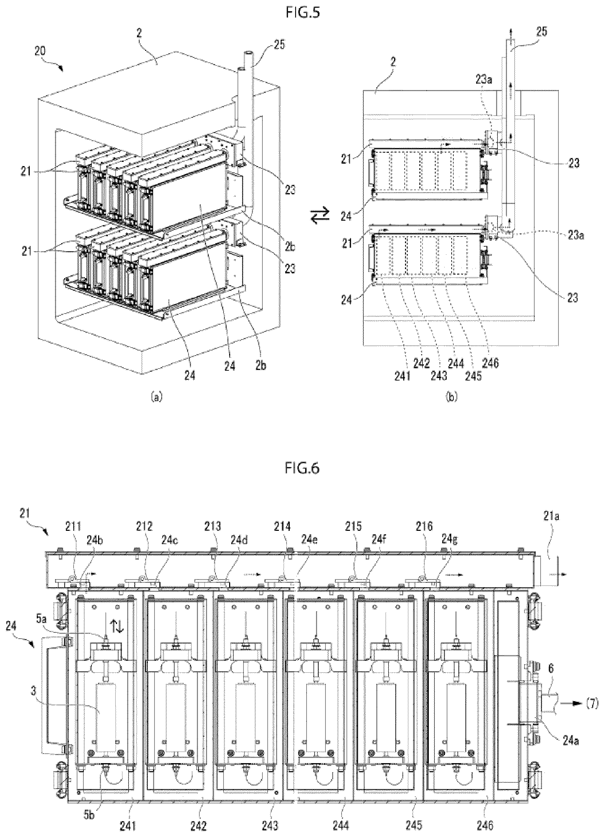

Next, a battery test apparatus 20 according to a second embodiment of the present invention as defined in appended claim 2 will be described with reference to FIGS. 5 and 6. Incidentally, the same components as those of the battery test apparatus 1 of the first embodiment are denoted by the same reference numerals, and the description thereof will be partly omitted.

FIG. 5 is an overall perspective view of the battery test apparatus 20. For the sake of explanation, the inside of a thermostatic oven 2 is set to be made visible. As illustrated in FIG. 5A, the battery test apparatus 20 includes a thermostatic oven 2, a plurality of battery holders 24 which are accommodated in the thermostatic oven 2 and detachably hold secondary batteries 3, and a charge and discharge test device 7 (not shown) capable of charging and discharging the secondary batteries 3.

The battery holders 24 are held in parallel in the thermostatic oven 2. In the present embodiment, a total of two stages are arranged with five battery holders 24 as one stage. The arrangement of the battery holders 24 can be changed as appropriate. Further, slide rails 2b to guide the slide of the battery holders 24 are provided within the thermostatic oven 2, and the battery holders 24 can be freely drawn from the front of the thermostatic oven 2 along the slide rails 2b.

FIG. 5B is a side view of the battery test apparatus 20. Each battery holder 24 has an inside divided into six chambers 241 to 246. That is, the battery holder 24 is a rectangular parallelepiped holder (multi-channel type) capable of holding one secondary battery 3 in each of the chambers 241 to 246 detachably and hermetically. Incidentally, the number of the chambers in the battery holder 24 can be changed as appropriate.

A common passage 21 ("second common passage" in the present invention) in the thermostatic oven 2 for discharging the exhaust gas is provided above each battery holder 24. Although details will be described later, each of the chambers 241 to 246 of the battery holder 24 has an exhaust port, and the exhaust gas discharged from each exhaust port joins at the common passage 21.

At the leading end of each common passage 21, one common passage 23 ("first common passage" in the present invention) is provided for each stage. The common passage 23 is a common passage in which gases from the five battery holders 24 merge. Further, each common passage 23 is connected to each of exhaust pipes 25, and the tip of each exhaust pipe 25 protrudes from the thermostatic oven 2. Thus, the exhaust gas flows from the exhaust ports of the chambers 241 to 246 through the common passage 21, the common passage 23, and the exhaust pipe 25 in this order, and is discharged to the outside of the thermostatic oven 2. Incidentally, the flow of the exhaust gas is as indicated by broken line arrows.

FIG. 6 shows the manner when an upper cover of the battery holder 24 is removed. In the battery holder 24, the inside thereof is divided into the chambers 241 to 246, and one secondary battery 3 (cylindrical type) can be set to each of the chambers 241 to 246.

Both a positive electrode contact probe pin 5a and a negative electrode contact probe pin 5b are connected to a cable 6 connected to the charge and discharge test device 7. Incidentally, the battery holder 24 and the cable 6 of the charge and discharge test device 7 are connected through a connector 24a provided on one side surface (right side in the figure) of the battery holder 24.

The upper side of the secondary battery 3 in the figure is made to contact with the contact probe pin 5a. The contact probe pin 5a is configured to be movable in a vertical direction in the figure and is made to contact with the secondary battery 3 from the upper side in the figure. Further, the lower side of the secondary battery 3 in the figure is made to contact with the contact probe pin 5b. Thus, the secondary battery 3 can be subjected to a charge/discharge test by the charge and discharge test device 7.

When testing the secondary batteries 3, some secondary batteries 3 catch fire. However, each of the chambers 241 to 246 in the battery holder 24 is constituted of a fireproof and pressure resistant container and hermetically holds the secondary batteries 3. Therefore, it is possible to basically confine the exhaust gas generated by ignition and prevent the exhaust gas from leaking to the outside.

When the exhaust gas is generated by the ignition, it is discharged from the exhaust ports 24b to 24g. For example, when the secondary battery 3 in the chamber 241 ignites, the generated exhaust gas flows out from the exhaust port 24b. A check valve 211 ("second check valve" in the present invention) connected to the common passage 21 is provided above the exhaust port 24b.

The check valve 211 has a mechanism to open it by wind pressure of the exhaust gas. Specifically, there is provided a structure in which a cover portion of the check valve 211 covers the exhaust port 24b of the exhaust ports 24b to 24g. The cover portion rotates about the rotational axis and is biased toward each of the exhaust ports 24b to 24g by a spring. When the cover portion receives wind pressure, it rotates to separate from each of the exhaust ports 24b to 24g and open.

The check valves 211 to 216 allow exhaust to the common passage 21, but prevent inflow from the common passage 21 into the chambers 241 to 246. Therefore, the exhaust gas flowing through the common passage 21 can be prevented from flowing back into the chambers 241 to 246.

A connection portion 21a at the end (right side in the figure) of the common passage 21 is connected to the common passage 23. As shown in FIG. 5B, a check valve 23a ("first check valve" in the present invention) is provided in the common passage 23. The check valve 23a is of the form that is opened by the wind pressure of the exhaust gas from the common passage 21 and allows exhaust to the common passage 23, but prevents inflow from the common passage 23 to the common passage 21. Therefore, it is possible to prevent the exhaust gas flowing through the common passage 23 from flowing back into the common passage 21 and each battery holder 24.

Thus, in the battery test apparatus 20, the exhaust gas can be guided to the outside of the thermostatic oven 2 and released in pressure. Even if the ignition of the secondary battery 3 occurs, the battery holder 24 in the present embodiment can treat it without using water, and can discharge the exhaust gas to the outside without the exhaust gas leaking out within the thermostatic oven 2.

Further, in the first embodiment, although the configuration has been described in which one secondary battery 3 is accommodated in the battery holder 4, for example, a plurality of secondary batteries 3 may be configured to be able to be held within one battery holder 4.

### Description of Reference Numerals

- 1: battery test apparatus
- 2: thermostatic oven
- 2a: open/close door
- 2b: slide rail
- 3: secondary battery
- 4: battery holder (single channel type)
- 4a: connector
- 4b: exhaust port
- 4c: upper cover
- 4d: lock mechanism
- 5: contact probe
- 5a: contact probe pin (positive electrode)
- 5b: contact probe pin (negative electrode)
- 6: cable
- 7: charge and discharge test device
- 10: flexible hose
- 13: common passage
- 13a: check valve
- 15: exhaust pipe
- 20: battery test apparatus
- 21: common passage
- 211 - 216: check valve
- 23: common passage
- 23a: check valve
- 24: battery holder (multi-channel type)
- 25: exhaust pipe
- 241 - 246: chamber

## Claims

1. A battery test apparatus (1) which performs a charge and discharge test of each of secondary batteries (3), comprising:
an enclosed battery holder (4) which detachably holds the secondary battery (3);
a thermostatic oven (2) in which the battery holder (4) is held; and
a charge and discharge test device (7) which charges and discharges the secondary battery (3) held in the battery holder (4) to test the secondary battery (3),
wherein the battery holder (4) is configured by a fireproof and pressure resistant container capable of withstanding an ignition of the secondary battery (3) and provided with an exhaust port (4b) connectable to a passage through which gas in the battery holder (4) is discharged to outside of the thermostatic oven (2) when the secondary battery (3) ignites,
wherein a plurality of the battery holders (4) are held in parallel in the thermostatic oven (2), and
wherein the battery test apparatus (1) includes a first common passage (13) which merges the gas discharged from the plurality of the battery holders (4) and discharges the gas to the outside of the thermostatic oven (2),
**characterized in that** each of the battery holders (4) includes a first check valve (13a) which allows exhaust to the first common passage (13) and prevents inflow from the first common passage (13).

2. A battery test apparatus (20) which performs a charge and discharge test of each of at least two secondary batteries (3), comprising:
an enclosed battery holder (4) which detachably holds the secondary batteries (3);
a thermostatic oven (2) in which the battery holder (4) is held; and
a charge and discharge test device (7) which charges and discharges the secondary batteries (3) held in the battery holder (4) to test the secondary batteries (3),
wherein the battery holder (4) is configured by a fireproof and pressure resistant container capable of withstanding an ignition of the secondary batteries (3) and provided with an exhaust port (4b) connectable to a passage through which gas in the battery holder (4) is discharged to outside of the thermostatic oven (2) when a secondary battery (3) ignites, wherein the battery holder (4) includes a plurality of chambers (241 to 246) divided for each of the secondary batteries (3),
wherein the battery holder (4) is capable of detachably holding each of the secondary batteries (3) for each of the chambers (241 to 246) and is provided for each of the chambers (241 to 246) with the exhaust port (4b) which guides the gas in the chamber (241 to 246) to the passage, and
wherein the battery test apparatus (20) includes a second common passage (21) as the passage, which merges the gas discharged from the exhaust ports (4b) and discharges the gas to the outside of the thermostatic oven (2),
**characterized in that** each of the exhaust ports (4b) has a second check valve (23a) which allows exhaust to the second common passage (21) and prevents inflow from the second common passage (21).

## Patentansprüche

1. Batterie-Prüfvorrichtung (1), die einen Lade- und Entladetest einer jeden von Sekundärbatterien (3) durchführt, umfassend:
einen umschlossenen Batteriehalter (4), der die Sekundärbatterie (3) entnehmbar hält,
einen thermostatischen Ofen (2), in dem der Batteriehalter (4) gehalten wird, und
eine Lade- und Entlade-Prüfvorrichtung (7), die die im Batteriehalter (4) gehaltene Sekundärbatterie (3) lädt und entlädt, um die Sekundärbatterie (3) zu prüfen,
wobei der Batteriehalter (4) durch einen feuerfesten und druckbeständigen Behälter gebildet ist, der einem Entzünden der Sekundärbatterie (3) standhalten kann und mit einer Abgasöffnung (4b) versehen ist, die mit einem Durchlass verbindbar ist, durch welchen Gas im Batteriehalter (4) beim Entzünden der Sekundärbatterie (3) nach außen aus dem thermostatischen Ofen (2) abgeführt wird,
wobei eine Vielzahl der Batteriehalter (4) parallel in dem thermostatischen Ofen (2) gehalten wird, und
wobei die Batterie-Prüfvorrichtung (1) einen ersten gemeinsamen Durchlass (13) umfasst, der das aus der Vielzahl der Batteriehalter (4) abgeführte Gas zusammenführt und das Gas nach außen aus dem thermostatischen Ofen (2) abführt,
**dadurch gekennzeichnet, dass** jeder der Batteriehalter (4) ein erstes Rückschlagventil (13a), welches das Abführen in den ersten gemeinsamen Durchlass (13) erlaubt und das Einströmen aus dem ersten gemeinsamen Durchlass (13) verhindert, umfasst.

2. Batterie-Prüfvorrichtung (20), die einen Lade- und Entladetest einer jeden von mindestens zwei Sekundärbatterien (3) durchführt, umfassend:
einen umschlossenen Batteriehalter (4), der die Sekundärbatterien (3) entnehmbar hält,
einen thermostatischen Ofen (2), in dem der Batteriehalter (4) gehalten wird, und
eine Lade- und Entlade-Prüfvorrichtung (7), welche die in dem Batteriehalter (4) gehaltenen Sekundärbatterien (3) lädt und entlädt, um die Sekundärbatterien (3) zu prüfen,
wobei der Batteriehalter (4) durch einen feuerfesten und druckbeständigen Behälter gebildet ist, der einem Entzünden der Sekundärbatterien (3) standhalten kann und mit einer Abgasöffnung (4b) versehen ist, die mit einem Durchlass verbindbar ist, durch welchen Gas im Batteriehalter (4) bei einem Entzünden einer Sekundärbatterie (3) nach außen aus dem thermostatischen Ofen (2) abgeführt wird,
wobei der Batteriehalter (4) eine Vielzahl von Kammern (241 bis 246) umfasst, die für jede der Sekundärbatterien (3) abgeteilt sind,
wobei der Batteriehalter (4) jede der Sekundärbatterien (3) für jede der Kammern (241 bis 246) entnehmbar halten kann und für jede der Kammern (241 bis 246) mit der Abgasöffnung (4b) versehen ist, die das Gas in der Kammer (241 bis 246) zum Durchlass führt, und
wobei die Batterie-Prüfvorrichtung (20) einen zweiten gemeinsamen Durchlass (21) als den Durchlass umfasst, der das aus den Abgasöffnungen (4b) abgeführte Gas zusammenführt und das Gas nach außen aus dem thermostatischen Ofen (2) abführt,
**dadurch gekennzeichnet, dass** jede der Abgasöffnungen (4b) ein zweites Rückschlagventil (23a) aufweist, das das Abführen in den zweiten gemeinsamen Durchlass (21) erlaubt und das Einströmen aus dem zweiten gemeinsamen Durchlass (21) verhindert.

## Revendications

1. Appareil de test de batterie (1) qui effectue un test de charge et de décharge de de chacune des batteries secondaires (3), comprenant :
un support de batterie enfermé (4) qui maintient la batterie secondaire (3) de manière détachable ;
un four thermostatique (2) dans lequel le support de batterie (4) est maintenu ; et
un dispositif de test de charge et de décharge (7) qui charge et décharge la batterie secondaire (3) maintenue dans le support de batterie (4) pour tester la batterie secondaire (3),
dans lequel le support de batterie (4) est constitué par un récipient ignifuge et résistant à la pression, capable de résister à une ignition de la batterie secondaire (3) et pourvu d'un orifice d'échappement (4b) connectable à un passage à travers lequel le gaz présent dans le support de batterie (4) est évacué vers l'extérieur du four thermostatique (2) quand la batterie secondaire (3) prend feu,
dans lequel une pluralité de supports de batterie (4) sont maintenus en parallèle dans le four thermostatique (2), et
dans lequel l'appareil de test de batterie (1) inclut un premier passage commun (13) qui fusionne le gaz évacué de la pluralité de supports de batterie (4) et évacue le gaz vers l'extérieur du four thermostatique (2),
**caractérisé en ce que** chacun des supports de batterie (4) inclut un premier clapet anti-retour (13a) qui permet l'échappement vers le premier passage commun (13) et empêche une entrée depuis le premier passage commun (13).

2. Appareil de test de batterie (20) qui effectue un test de charge et de décharge de de chacune des au moins deux batteries secondaires (3), comprenant :
un support de batterie fermé (4) qui maintient les batteries secondaires (3) de manière détachable ;
un four thermostatique (2) dans lequel le support de batterie (4) est maintenu ; et
un dispositif de test de charge et de décharge (7) qui charge et décharge les batteries secondaires (3) maintenues dans le support de batterie (4) pour tester les batteries secondaires (3),
dans lequel le support de batterie (4) est configuré par un récipient ignifuge et résistant à la pression, capable de résister à une ignition des batteries secondaires (3) et pourvu d'un orifice d'échappement (4b) connectable à un passage à travers lequel le gaz présent dans le support de batterie (4) est évacué vers l'extérieur du four thermostatique (2) quand une batterie secondaire (3) prend feu, dans lequel le support de batterie (4) inclut une pluralité de chambres (241 à 246) divisées pour chacune des batteries secondaires (3),
dans lequel le support de batterie (4) est capable de maintenir chacune des batteries secondaires (3) de manière détachable pour chacune des chambres (241 à 246) et est pourvu, pour chacune des chambres (241 à 246), de l'orifice d'échappement (4b) qui guide le gaz présent dans la chambre (241 à 246) vers le passage, et
dans lequel l'appareil de test de batterie (20) inclut un deuxième passage commun (21) comme passage qui fusionne le gaz évacué par les orifices d'échappement (4b) et évacue le gaz vers l'extérieur du four thermostatique (2),
**caractérisé en ce que** chacun des orifices d'échappement (4b) comporte un deuxième clapet anti-retour (23a) qui permet l'échappement vers le deuxième passage commun (21) et empêche une entrée depuis le deuxième passage commun (21).
